**Europäisches Patentamt**

**European Patent Office**

**Office européen des brevets**

(19)

(11) Numéro de publication: **0 161 969**
**B1**

(12) **FASCICULE DE BREVET EUROPEEN**

(45) Date de publication du fascicule du brevet:
**24.06.87**

(21) Numéro de dépôt: **85400763.0**

(22) Date de dépôt: **17.04.85**

(51) Int. Cl.⁴: **B 60 T 13/14**

(54) **Dispositif d'assistance hydraulique au freinage.**

(30) Priorité: **26.04.84  FR 8406583**

(43) Date de publication de la demande:
**21.11.85 Bulletin 85/47**

(45) Mention de la délivrance du brevet:
**24.06.87 Bulletin 87/26**

(84) Etats contractants désignés:
**DE GB IT NL SE**

(56) Documents cités:
**DE - A - 2 942 979**
**FR - A - 2 274 481**

(73) Titulaire: **BENDIX France, 126, rue de Stalingrad,
F-93700 Drancy (FR)**

(72) Inventeur: **Kervagoret, Gilbert, 5 Impasse Nobleterre,
F-95100 Argenteuil (FR)**

(74) Mandataire: **Timoney, Ian Charles Craig et al, Service
Brevets Bendix 44, rue François 1er, F-75008 Paris (FR)**

ACTORUM AG

## Description

La présente invention se rapporte aux dispositifs d'assistance hydraulique et plus particulièrement à un tel dispositif pour un circuit de freinage à fonctionnement mixte hydrodynamique (plus communément désigné sous l'appellation «full power») et hydrostatique.

On connaît de la demande de brevet français N° 84-03105 (FR-A-2 560 133) au nom de la demanderesse (publiée le 30.08.85) un dispositif d'assitance hydraulique du type dit «full power» qui est susceptible de fonctionner comme un maître-cylindre conventionnel en mode hydrostatique en cas de défaillance du circuit haute pression. Ce dispositif comprend une coupelle annulaire qui sépare une première chambre de pression d'une deuxième chambre reliée aux freins du véhicule et susceptible d'être reliée à la source hautre pression. En cas de défaillance du circuit haute pression, lors d'une mise en œuvre du dispositif, un piston, qui limite la première chambre, se déplace et comprime le fluide dans la première chambre, ce qui provoque un basculement de la coupelle et permet au fluide sous pression de passer vers les freins.

Malgré ses avantages évidents, ce système présente cependant de légers inconvénients en ce que sa construction nécessite de nombreux perçages dans le piston et dans des composants associés.

L'invention a donc pour objet de proposer un dispositif d'assistance hydraulique du type dit «full power» susceptible de fonctionner comme un maître-cylindre conventionnel en cas de défaillance du circuit haute pression, qui soit de construction simple, de fiabilité accrue et de faibles coûts de fabrication.

Pour ce faire, l'invention concerne un dispositif d'assistance hydraulique comprenant un boîtier pourvu d'un alésage dans lequel est monté coulissant un premier piston déplaçable sous l'effet d'une pédale de freinage entre une première position isolant une première chambre, qui est reliée aux freins du véhicule, d'une source de fluide hautre pression, et une deuxième position faisant communiquer la première chambre avec la source haute pression; le dispositif comprenant de plus une deuxième chambre formée dans le boîtier, un passage reliant la première et la deuxième chambre, et un moyen de clapet dans le passage de façon que le passage soit normalement fermé, sous l'effet de la pression dans la deuxième chambre, caractérisé en ce que le dispositif comprend un deuxième passage faisant communiquer la deuxième chambre avec un réservoir basse pression et un deuxième moyen de clapet dans le passage, le moyen de clapet étant sensible aux pressions dans les première et deuxième chambres de façon que le passage reste normalement fermé pendant la mise en œuvre du dispositif tout en permettant le passage de fluide de la deuxième chambre vers le réservoir lors d'un défreinage.

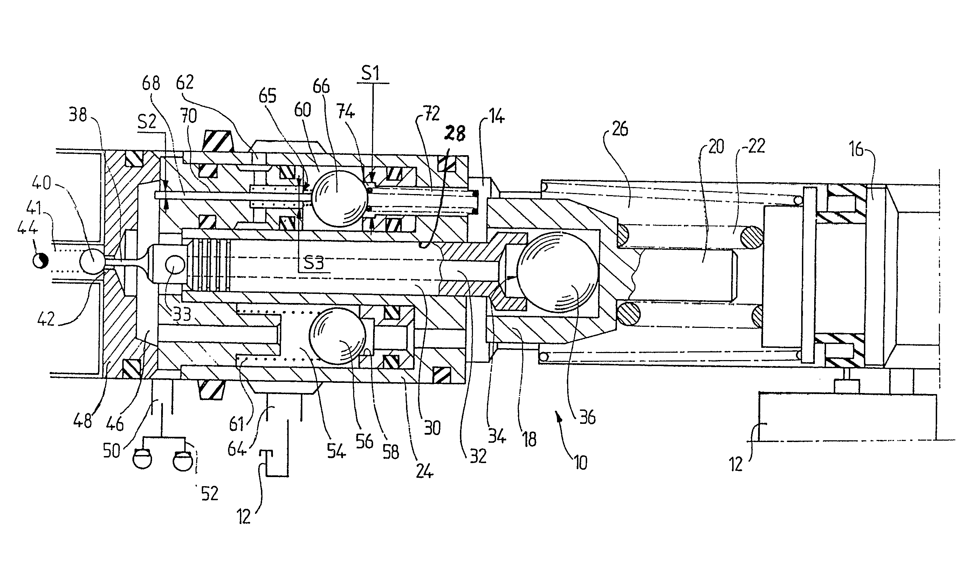

D'autres caractéristiques et avantages de la présente invention ressortiront de la description suivante d'un mode de réalisation donné à titre illustratif, mais nullement limitatif, faite en relation avec le dessin annexé, sur lequel:

— la figure unique est une vue en coupe longitudinale et partielle d'un dispositif d'assistance hydraulique selon l'invention.

Comme représenté sur la figure, le dispositif d'assistance hydraulique comprend un boîtier 10 sur lequel est monté un réservoir basse pression 12 de fluide hydraulique. Le boîtier comprend un alésage 14 dans lequel est monté coulissant un piston 16 susceptible d'être actionné par une pédale de freinage (non représentée). Une cage formant logement 18 est montée dans l'alésage 14 et comporte une tige de poussée 20, autour de laquelle est disposé un ressort hélicoïdal 22. Une fourrure 24 est montée fixe dans l'alésage 14 du boîtier 10 et définit avec le piston 16 une chambre de pression 26. Dans un alésage central 28 de la fourrure 24 est monté coulissant, avec un jeu très faible, un piston de commande 30 qui comporte un perçage axial 32 relié à un orifice 33. Le perçage 32 est pourvu d'un siège de clapet 34 de diamètre interne égal au diamètre du piston de commande 30. Le siège 34 coopère avec un clapet à bille 36 qui est retenu, à faible jeu, dans le logement 18. Le piston de commande 30 comporte, en outre, une tige de poussée 38 qui, lors d'un déplacement du piston de commande 30 vers la gauche (en regardant le dessin), prend appui contre un clapet à bille 40 et déplace ce dernier de son siège 42, contre lequel le clapet à bille 40 est normalement sollicité par un ressort 41. L'ouverture du clapet à bille 40 permet au fluide d'une source haute pression 44 de passer dans une chambre de pression 46 définie entre la fourrure 24 et un élément de fermeture 48. La chambre 46 est reliée par un orifice 50 aux freins 52 du véhicule.

La fourrure 24 comporte, en outre, un deuxième alésage étagé 54 qui relie les chambres de pression 26, 46 et qui est normalement fermé par un clapet à bille 56 sollicité vers son siège 58 par un ressort 61 faiblement taré. La fourrure 24 comprend, de plus, un troisième alésage 60 étagé qui est relié par une ouverture 62 dans la paroi de la fourrure 24 à un espace annulaire qui est en communication hydraulique par une ouverture 64 avec le réservoir basse pression 12. Dans l'alésage 60 est monté un clapet à bille 66 en appui sur une aiguille 68 de faible diamètre qui coulisse avec un jeu très faible dans un alésage associé 70. Un ressort 72 est librement monté dans l'alésage 60 et vient en butée contre la bille 66 et fait normalement saillie dans la chambre 26. Le diamètre S1 de l'alésage 60 dans la région où il forme un siège 74 pour le clapet à bille 66 est nettement supérieur au diamètre S2 de l'aiguille 68.

Lors de la mise en œuvre du dispositif, en fonctionnement normal, le piston 16 se déplace vers la gauche et, par l'intermédiaire du ressort 22, entraîne le déplacement du logement 18. Le déplacement du logement provoque la fermeture du clapet à bille 36 et, par l'intermédiaire du piston de commande 30, ouvre le clapet à bille 40 qui permet au fluide sous pression de passer par l'orifice 50 vers les freins 52 du véhicule. La pression dans la chambre 46, qui en cours de freinage est plusieurs fois supérieure à celle dans la chambre 26, agit sur l'aiguille 68 et maintient le clapet à bille 66 dans sa position fermée. Le clapet à bille 56 reste fermé, sous l'effet du fluide haute pression qui passe de la chambre 46 dans l'alésage 54. Le fluide sous pression agit par le piston de commande 30 sur le logement 18, et donc vient contrebalancer l'effort fourni par la pédale de freinage. Ainsi, à chaque effort de commande correspond une pression de freinage bien déterminée.

Le déplacement vers la gauche (sur le dessin) du piston 16 du maître-cylindre refoule le liquide de la chambre 26 vers le réservoir à travers le clapet 66 de manière que la pression π dans la chambre 26 soit la pression de freinage $X \dfrac{S2}{S1}$. Cette pression π sert de pression de sensation pédale par action sur la section du piston 16.

Au relâchement de la pédale de freinage, le piston 16 revient vers la droite sous l'effet des diverses précontraintes. La pression de freinage se décharge par le claptet à bille 36 dans la première chambre de pression 26 et ce surplus de fluide passe par le clapet à bille 66 et l'ouverture 62 vers le réservoir basse pression 12. Si le relâchement est interrompu à une position quelconque, le clapet à bille 36 se referme et la pression de freinage se stabilise à la valeur correspondante.

En cas de défaillance du circuit haute pression, par exemple si la pompe ou l'accumulateur est hors service, un clapet (non représenté) en amont du clapet à bille 40 se ferme et isole le dispositif du circuit haute pression. Lors d'une application de freinage, le logement 18 vient en butée sur la fourrure 24, comprimant le ressort 72 qui plaque le clapet à bille sur son siège 65, dont le diamètre S3 est inférieur au diamètre S1 du siège 74, et ferme l'alésage 60 isolant la chambre 26 du réservoir 12. Le clapet à bille 66 reste fermé pendant que la première chambre monte en pression sous l'effort du déplacement du piston 16. Le fluide sous pression ouvre le clapet à bille 56 et passe par l'alésage 54 vers les freins 52. Le dispositif fonctionne comme un maître-cylindre classique. Au relâchement les freins se déchargent dans la chambre 26 et, de là, vers le réservoir 12; ceci à travers le siège de clapet 34 devenu inopérant dès que le logement 18 est en contact avec la fourrure 24, du fait que la bille du clapet 36 est quasiment libre.

Le dispositif de freinage qui vient d'être décrit est prévu pour un circuit de freinage. En pratique, on prévoira un système comprenant deux dispositifs identiques, chacun associé à un circuit de freinage respectif. Dans ce dernier cas, les deux dispositifs sont avantageusement disposés dans un même boîtier.

## Revendications

1. Dispositif d'assistance hydraulique comprenant un boîtier (10) pourvu d'un alésage (14) dans lequel est monté coulissant un premier piston (16) déplaçable sous l'effet d'une pédale de freinage entre une première position isolant une première chambre (46), qui est reliée aux freins (52) du véhicule, d'une source de fluide haute pression (44), et une deuxième position faisant communiquer la première chambre (46) avec la source haute pression (44), le dispositif comprenant, de plus, une deuxième chambre (26) formée dans le boîtier (10), un passage (54) reliant la première et la deuxième chambre (46, 26) et un moyen de clapet (56) dans le passage (54) de façon que le passage (54) soit normalement fermé, sous l'effet de la pression dans la deuxième chambre (26), caractérisé en ce que le dispositif comprend un deuxième passage (60, 62) faisant communiquer la deuxième chambre (26) avec un réservoir basse pression (12) et un deuxième moyen de clapet (66) dans un alésage (60) dudit passage, le moyen de clapet (66) étant sensible aux pressions dans les première et deuxième chambres (46, 26) de façon que l'alésage (60) soit normalement isolé de la deuxième chambre (26) pendant la mise en œuvre du dispositif, tout en permettant le passage de fluide de la deuxième chambre (26) vers le réservoir (12) lors d'un défreinage.

2. Dispositif selon la revendication 1, caractérisé en ce que le deuxième moyen de clapet (66) présente une surface (S2) exposée à la première chambre (46) qui est inférieure à la surface d'exposition (S1) présentée à la deuxième chambre (26).

3. Dispositif selon la revendication 2, caractérisé en ce que le deuxième moyen de clapet (66) comprend un clapet à bille (66) qui comporte un moyen d'actionnement (68) qui fait saillie par un alésage (70) dans la première chambre (46).

4. Dispositif selon l'une des revendications 1 à 3, caractérisé en ce que le moyen de clapet (56) comprend un clapet à bille (56).

5. Dispositif selon l'une des revendications 1 à 4, caractérisé en ce qu'il comprend, de plus, une fourrure (24) dans l'alésage (14) qui sépare la première chambre (46) de la deuxième chambre (26) et qui comporte deux alésages (54, 60) chacun associé avec un des moyens de clapet (56, 66) respectifs.

## Patentansprüche

1. Hydraulische Servovorrichtung mit einem Gehäuse (10), das mit einer Bohrung (14) versehen ist, in der ein erster Kolben gleitend gelagert ist, welcher unter der Wirkung eines Bremspedals verschiebbar ist zwischen einer ersten Stellung, die eine mit den Fahrzeugbremsen (52) verbundene erste Kammer (46) von einer Hochdruckquelle (44) absperrt, und einer zweiten Stellung, die eine Verbindung zwischen der ersten Kammer (46) und der Hochdruckquelle (44) herstellt, wobei die Vorrichtung ausserdem versehen ist mit einer zweiten Kammer (26), die in dem Gehäuse (10) gebildet ist, einem Kanal (54), der die erste und die zweite Kammer (46, 26) verbindet, und einer Ven- tileinrichtung (56) in dem Kanal (54), derart, dass der Kanal (54) unter der Wirkung des Drucks in der zweiten Kammer (26) normalerweise geschlossen ist, dadurch gekennzeichnet, dass die Vorrichtung versehen ist mit einem zweiten Kanal (60, 62), der die zweite Kammer (26) mit einem Niederdruckreservoir (12) verbindet, une einer zweiten Ventileinrichtung (66) in einer Bohrung (60) des Kanals, wobei die Ventileinrichtung (66) auf Druck in der ersten und zweiten Kammer (46, 26) anspricht, derart, dass die Bohrung (60) normalerweise, wenn die Vorrichtung in Betrieb ist, von der zweiten Kammer (26) abgetrennt ist, während Strömungsmittel von der zweiten Kammer (26) bei einer Bremsentlastung zum Reservoir (12) strömen kann.

2. Vorrichtung nach Anspruch 1, dadurch gekennzeichnet, dass die zweite Ventileinrichtung (66) eine der ersten Kammer (46) ausgesetzte Fläche ($S_2$) aufweist, die kleiner ist als die der zweiten Kammer (26) ausgesetzte Fläche ($S_1$).

3. Vorrichtung nach Anspruch 2, dadurch gekennzeichnet, dass die zweite Ventileinrichtung (66) ein Kugelventil (66) ist, das ein Betätigungsmittel (68) aufweist, welches durch eine Bohrung (70) in die erste Kammer (46) vorsteht.

4. Vorrichtung nach einem der Ansprüche 1-3, dadurch gekennzeichnet, dass die Ventileinrichtung (56) ein Kugelventil (56) ist.

5. Vorrichtung nach einem der Ansprüche 1-4, dadurch gekennzeichnet, dass sie ausserdem in der Bohrung (14) einen Mantel (24) aufweist, der die erste Kammer (46) von der zweiten Kammer (26) trennt und der zwei Bohrungen (54, 60) aufweist, die jeweils einer der betreffenden Ventileinrichtungen (56, 66) zugeordneten sind.

## Claims

1. Hydraulic servo device comprising a casing (10) provided with a bore (14) slidingly receiving a first piston (16) displaceable under the action of a brake pedal between a first position isolating a first chamber (46) connected to the vehicle brakes (52) from a high pressure fluid source (44), and a second position making the first chamber (46) communicate with the high pressure source (44), the device further comprising a second chamber (26) formed in the casing (10), a passage (54) connecting the first and second chambers (46, 26) and a valve means (56) in the passage (54) such that the passage (54) is normally closed under the action of the pressure in the second chamber (26), characterized in that the device comprises a second passage (60, 62) making the second chamber (26) communicate with a low pressure reservoir (12), and a second valve means (66) in a bore (60) of said passage, the valve means (66) being sensible to pressures in the first and second chambers (46, 26) such that the bore (60) is normally isolated from the second chamber (26) during operation of the device while permitting the passage of fluid from the second chamber (26) towards the reservoir (12) during a brake release.

2. Device according to claim 1, characterized in that the second valve means (66) presents a surface ($S_2$) exposed to the first chamber (46) which is smaller than the exposed surface ($S_1$) presented to the second chamber (26).

3. Device according to claim 2, characterized in that the second valve means (66) comprises a ball valve (66) which comprises an actuating means (68) which projects through a bore (70) into the first chamber (46).

4. Device according to any of claims 1 to 3, characterized in that the valve means (56) comprises a ball valve (56).

5. Device according to any of claims 1 to 4, characterized in that it further comprises a sleeve (24) in the bore (14) which separates the first chamber (46) from the second chamber (26) and which includes two bores (54, 60) each associated with one of the respective valve means (56, 66).